# EUROPEAN PATENT APPLICATION

(11) **EP 3 950 835 A1**
(43) Date of publication of application: **09.02.2022**
(21) Application number: 20782598.5
(22) Date of filing: 03.04.2020
(51) Int. Cl.: C08L 67/00, C08L 101/02, C08L 101/14

(54) **RESIN COMPOSITION**

(30) Priority: 05.04.2019 JP 2019072737
(71) Applicant: Kao Corporation, Chuo-ku Tokyo 103-8210 (JP)
(72) Inventor: YOSHIMURA Tadanori, Wakayama-shi, Wakayama 640-8580 (JP)
(74) Representative: Hoffmann Eitle
(86) International application number: PCT/JP2020/015306
(87) International publication number: WO 2020/204160

(57) **Abstract**

The resin composition of the present invention includes a water-soluble resin (component A); and at least one selected from the group consisting of an inorganic salt and a polycyclic aromatic sulfonate (component B), the component A has a polycyclic aromatic monomer unit, the component B has a solubility in water at 25°C of 1 g/100 g or more, and a content of the component B relative to 100 parts by mass of the component A is 1 part by mass or more and 40 parts by mass or less. According to the resin composition of the present invention, a resin composition that can be obtained by recycling and has improved heat resistance can be provided.

## Description

### TECHNICAL FIELD

The present invention relates to a resin composition.

### BACKGROUND ART

In recent years, due to increase in environmental awareness, waste reduction, recycling and the like of products have been demanded. For polymer materials, though use of biodegradable polymers can be considered as one means for waste reduction, biodegradable polymer materials are limited, application examples thereof are few, and the contribution to waste reduction is small.

Meanwhile, water-soluble polymers are used as dispersants, aqueous coating materials and the like, and can be dissolved or dispersed in water after use. Thus, these materials can be relatively easily removed by contact with water. When a waste liquid containing the water-soluble polymers flows out into the environment, biodegradability of the water-soluble polymers is required. However, water-soluble polymers are further limited, and the spread of biodegradable water-soluble polymers is not sufficient.

In view of such a current situation, when a resin composition containing water-soluble polymers dissolved or dispersed in water can be recovered, release into the environment is suppressed. As a method for recovering such a resin composition from water, a method has been proposed in which a water-soluble polymer or the like dissolved in an aqueous solution is deposited and precipitated by adding a salt or the like to the aqueous solution to recover the resin composition (for example, JP-A-2016-215109, JP-T-2017-509508, and JP-T-2008-539326).

### SUMMARY OF THE INVENTION

The present invention is a resin composition, including: a water-soluble resin (component A); and at least one selected from the group consisting of an inorganic salt and a polycyclic aromatic sulfonate (component B), wherein the component A has a polycyclic aromatic monomer unit, the component B has a solubility in water at 25°C of 1 g/100 g or more, and a content of the component B relative to 100 parts by mass of the component A is 1 part by mass or more and 40 parts by mass or less.

### MODE FOR CARRYING OUT THE INVENTION

When a recovered resin composition cannot be reused, the resin composition needs to be disposed by incineration or the like, and a load on the environment still occurs.

Though recovery and recycling of the resin composition are promoted from the viewpoint of reusing the resin composition, reproduction of the original physical properties of the resin composition after recovery is difficult after recycling. Further, improvement of physical properties such as heat resistance is more difficult after recycling.

The present invention provides a resin composition that can be obtained by recycling and has improved heat resistance.

The present invention is a resin composition, including: a water-soluble resin (component A); and at least one selected from the group consisting of an inorganic salt and a polycyclic aromatic sulfonate (component B), wherein the component A has a polycyclic aromatic monomer unit, the component B has a solubility in water at 25°C of 1 g/100 g or more, and a content of the component B relative to 100 parts by mass of the component A is 1 part by mass or more and 40 parts by mass or less.

According to the present invention, a resin composition that can be obtained by recycling and has improved heat resistance can be provided.

One embodiment according to the present invention is explained below.

### <Resin composition>

The resin composition of the present embodiment includes a water-soluble resin (component A); and at least one selected from the group consisting of an inorganic salt and a polycyclic aromatic sulfonate (component B), the component A has a polycyclic aromatic monomer unit, the component B has a solubility in water at 25°C of 1 g/100 g or more, and a content of the component B relative to 100 parts by mass of the component A is 1 part by mass or more and 40 parts by mass or less. According to the resin composition of the present embodiment, the heat resistance of a resin composition can be improved. Though the reason why the resin composition exhibits such an effect is not clear, it is presumed that the component A interacts with the component B to suppress the molecular motion, which can suppress the decrease in physical properties such as heat resistance due to recycling.

In the present specification, recycling means separating a solid containing a resin composition from a liquid in which the resin composition is dissolved or dispersed.

### [Water-soluble resin (component A)]

The component A is not particularly limited as long as the component A is a resin that is dissolved in neutral water at 70°C or more in an amount of 5% by mass or more and has a monomer unit derived from a polycyclic aromatic compound (hereinafter, also simply referred to as a polycyclic aromatic monomer unit).

From the viewpoint of improving the heat resistance and the solubility in neutral water of the resin composition, the component A is preferably a resin having a hydrophilic group such as a hydroxyl group, a sulfonic acid group, a carboxyl group, and a phosphoric acid group other than the hydrophilic group that constitutes the polymerization related to the production of the water-soluble resin (hereinafter, also simply referred to as a hydrophilic group).

Examples of the component A include a water-soluble polyester resin, a water-soluble polyamide resin, a water-soluble polyimide resin, a water-soluble acrylic resin, a water-soluble polyurethane resin, a water-soluble polyallylamine resin, a water-soluble phenol resin, a water-soluble epoxy resin, a water-soluble phenoxy resin, a water-soluble urea resin, a water-soluble melamine resin, a polyvinyl alcohol resin, and modified products of these resins. These can be used singly or in combination of two or more types thereof. Among them, from the viewpoint of exhibiting the effects of the present invention, at least one selected from the group consisting of a water-soluble polyester resin and a water-soluble polyamide resin are preferable, and a water-soluble polyester resin is more preferable.

The weight average molecular weight of the component A is preferably 3,000 or more, more preferably 10,000 or more, still more preferably 13,000 or more, and still more preferably 15,000 or more from the viewpoint of improving the heat resistance of the water-soluble resin and the viewpoint of suppressing the decrease in physical properties due to recycling, and preferably 70,000 or less, more preferably 50,000 or less, and still more preferably 30,000 or less from the viewpoint of improving the solubility in neutral water of the water-soluble resin. In the present specification, the weight average molecular weight is measured by the method described in Examples.

The content of the component A in the resin composition is preferably 70% by mass or more, more preferably 73% by mass or more, still more preferably 75% by mass or more, and is preferably 98% by mass or less, more preferably 97% by mass or less, still more preferably 96% by mass or less from the viewpoint of improving the heat resistance of the resin composition.

### [Water-soluble polyester resin]

Examples of the water-soluble polyester resin include a water-soluble polyester resin having a hydrophilic monomer unit a having a hydrophilic group, a hydrophobic dicarboxylic acid monomer unit b, and a diol monomer unit c, and having a percentage of the hydrophilic monomer unit a based on the total of the hydrophilic monomer unit a and the hydrophobic dicarboxylic acid monomer unit b in the polyester resin of 10 to 70 mol%.

### (Hydrophilic monomer unit a)

The water-soluble polyester resin has a hydrophilic monomer unit a having a hydrophilic group. The hydrophilic monomer unit a is not particularly limited as long as the hydrophilic monomer unit a is a monomer unit having a hydrophilic group. The monomer from which the hydrophilic monomer unit a is derived is also referred to as a monomer a.

Examples of the hydrophilic group include at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group from the viewpoint of improving the heat resistance and the solubility in neutral water of the resin composition and the viewpoint of ease of polymerization reaction during production of the water-soluble polyester resin. Among them, from the viewpoint of improving the heat resistance of the resin composition, at least one selected from the group consisting of a arboxylate group, a phosphate group, and a sulfonate group are preferable, and a sulfonate group is more preferable.

The sulfonate group is preferably a sulfonate group represented by -SO₃M³ (M³ represents a counter ion of a sulfonic acid group that constitutes a sulfonate group, and from the viewpoint of improving the solubility in neutral water of the resin composition, M³ is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably one or two selected from the group consisting of a sodium ion and a potassium ion, and still more preferably a sodium ion.) from the viewpoint of improving the solubility in neutral water of the resin composition and the viewpoint of ease of polymerization reaction during production of the water-soluble polyester resin.

Examples of the neutral water include an aqueous solution having a pH of 6 to 8. Specific examples of the neutral water include deionized water, pure water, tap water, and industrial water, and deionized water or tap water is preferable from the viewpoint of availability. The neutral water can contain a water-soluble organic solvent as long as the resin after recycling is not damaged. Examples of the water-soluble organic solvent include lower alcohols such as methanol, ethanol, and 2-propanol, glycol ethers such as propylene glycol monomethyl ether, ethylene glycol monoethyl ether, ethylene glycol mono-tertiary butyl ether, and diethylene glycol monobutyl ether, and ketones such as acetone and methyl ethyl ketone.

The monomer a is preferably at least one selected from the group consisting of carboxylic acids, amines, and amino acids, and more preferably carboxylic acids from the viewpoint of improving the heat resistance, the solubility in neutral water, and the moisture absorption resistance of the resin composition, and the viewpoint of ease of polymerization reaction during production of the water-soluble polyester resin. Among the carboxylic acids, from the same viewpoint, aromatic carboxylic acids are preferable, and at least one selected from the group consisting of hydroxy group-containing aromatic dicarboxylic acids, primary amino group-containing aromatic dicarboxylic acids, sulfonic acid group-containing aromatic dicarboxylic acids, and sulfonate group-containing aromatic dicarboxylic acids are more preferable. Among them, from the same viewpoint, at least one selected from the group consisting of 5-hydroxyisophthalic acid, 5-aminoisophthalic acid, 5-sulfoisophthalic acid, 2-sulfoterephthalic acid, and 4-sulfo-2,6-naphthalenedicarboxylic acid are preferable, one or two selected from the group consisting of 5-sulfoisophthalic acid and 2-sulfoterephthalic acid are more preferable, and 5-sulfoisophthalic acid is still more preferable.

The content of the hydrophilic group in the water-soluble polyester resin is preferably 0.5 mmol/g or more, more preferably 0.7 mmol/g or more, and still more preferably 0.9 mmol/g or more from the viewpoint of improving the solubility in neutral water and heat resistance of the resin composition, and is preferably 3 mmol/g or less, more preferably 2.5 mmol/g or less, and still more preferably 2 mmol/g or less from the viewpoint of improving the moisture absorption resistance of the resin composition. The content of the hydrophilic group in the water-soluble polyester resin is preferably 0.5 to 3 mmol/g, more preferably 0.7 to 2.5 mmol/g, and still more preferably 0.9 to 2 mmol/g from the viewpoint of improving the solubility in neutral water and the moisture absorption resistance of the resin composition.

The percentage of the amount of substance of the hydrophilic monomer unit a based on the total amount of substance of all monomer units in the water-soluble polyester resin is preferably 1 mol% or more, more preferably 7 mol% or more, still more preferably 10 mol% or more, still more preferably 12 mol% or more from the viewpoint of improving the solubility in neutral water and heat resistance of the resin composition, and is preferably 45 mol% or less, more preferably 40 mol% or less, still more preferably 35 mol% or less from the viewpoint of improving the moisture absorption resistance of the resin composition. The percentage of the amount of substance of the hydrophilic monomer unit a based on the total amount of substance of all monomer units in the water-soluble polyester resin is preferably 1 to 45 mol%, more preferably 7 to 45 mol%, still more preferably 10 to 40 mol%, still more preferably 12 to 35 mol% from the viewpoint of improving the solubility in neutral water of the resin composition.

### (Hydrophobic dicarboxylic acid monomer unit b)

The water-soluble polyester resin has a hydrophobic dicarboxylic acid monomer unit b. The hydrophobic dicarboxylic acid monomer unit b does not have the hydrophilic group. In the present specification, the dicarboxylic acid from which the hydrophobic dicarboxylic acid monomer unit b is derived is also referred to as a dicarboxylic acid b.

The dicarboxylic acid b is preferably at least one selected from the group consisting of an aromatic dicarboxylic acid, an aliphatic dicarboxylic acid, and an alicyclic dicarboxylic acid, from the viewpoint of improving the heat resistance, the solubility in neutral water, and the moisture absorption resistance of the resin composition and the viewpoint of ease of polymerization reaction during production of the water-soluble polyester resin. Among them, from the same viewpoint, at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid are more preferable, at least one selected from the group consisting of terephthalic acid, 2,5-furandicarboxylic acid, and 2,6-naphthalenedicarboxylic acid are still more preferable, and 2,6-naphthalenedicarboxylic acid is still more preferable.

The percentage of the amount of substance of the hydrophobic dicarboxylic acid monomer unit b in the water-soluble polyester resin based on the total amount of substance of all monomer units in the water-soluble polyester resin is preferably 1 mol% or more, more preferably 10 mol% or more, and still more preferably 15 mol% or more from the viewpoint of improving the moisture absorption resistance of the resin composition, and is preferably 45 mol% or less, more preferably 42 mol% or less, still more preferably 40 mol% or less from the viewpoint of improving the solubility in neutral water of the resin composition. The percentage of the amount of substance of the hydrophobic dicarboxylic acid monomer unit b in the water-soluble polyester resin based on the total amount of substance of all monomer units in the water-soluble polyester resin is preferably 1 to 45 mol%, more preferably 10 to 42 mol%, still more preferably 15 to 40 mol% from the viewpoint of improving the moisture absorption resistance and the solubility in neutral water of the resin composition.

The molar ratio of the hydrophilic monomer unit a to the hydrophobic dicarboxylic acid monomer unit b of the water-soluble polyester resin (the hydrophilic monomer unit a/the hydrophobic dicarboxylic acid monomer unit b) is preferably 10/90 or more, more preferably 15/85 or more, still more preferably 18/82 or more, and still more preferably 20/80 or more from the viewpoint of improving the heat resistance, moisture resistance, and solubility in neutral water of the resin composition, and preferably 70/30 or less, more preferably 65/35 or less, and still more preferably 60/40 or less from the same viewpoint.

### (Diol monomer unit c)

The water-soluble polyester resin has a diol monomer unit c. The diol from which the diol monomer unit is derived is also referred to as a diol c.

As the diol c, an aliphatic diol, an aromatic diol and the like can be used, and an aliphatic diol is preferable from the viewpoint of the production cost of the water-soluble polyester resin.

The carbon number of the diol c is preferably 2 or more from the viewpoint of improving the heat resistance, moisture absorption resistance, and solubility in neutral water of the resin composition, and is preferably 31 or less, more preferably 25 or less, still more preferably 20 or less, still more preferably 15 or less from the same viewpoint.

Examples of the aliphatic diol include at least one selected from the group consisting of a chain diol and a cyclic diol, a chain diol is preferable from the viewpoint of improving the moisture absorption resistance and the solubility in neutral water, and a cyclic diol is preferable from the viewpoint of improving the heat resistance of the resin composition.

The carbon number of the chain diol is preferably 2 or more from the viewpoint of improving the heat resistance and moisture absorption resistance of the resin composition, and is preferably 6 or less, more preferably 4 or less, still more preferably 3 or less, and still more preferably 2 from the viewpoint of improving the solubility in neutrality of the resin composition.

The diol c can have ether oxygen, when the diol c is a chain aliphatic diol, the number of ether oxygen is preferably 1 or less from the viewpoint of improving the heat resistance, moisture absorption resistance, and solubility in neutral water of the resin composition, and when the diol c is a cyclic aliphatic diol, the number of ether oxygen is preferably 2 or less from the same viewpoint.

The chain diol is preferably at least one selected from the group consisting of ethylene glycol, 1,2-propanediol, 1,3-propanediol, diethylene glycol, and dipropylene glycol, more preferably at least one selected from the group consisting of ethylene glycol, 1,2-propanediol, and 1,3-propanediol, and still more preferably ethylene glycol from the viewpoint of improving the heat resistance, moisture absorption resistance, and solubility in neutral water of the resin composition.

The carbon number of the cyclic diol is preferably 6 or more, more preferably 20 or more, still more preferably 25 or more from the viewpoint of improving the heat resistance and moisture absorption resistance of the resin composition, and is preferably 31 or less, and more preferably 30 or less from the viewpoint of improving the solubility in neutrality of the resin composition.

The cyclic diol is preferably at least one selected from the group consisting of aromatic diols, more preferably at least one selected from the group consisting of polycyclic aromatic diols, still more preferably at least one selected from the group consisting of fluorene derivatives, and still more preferably bisphenoxyethanolfluorene from the viewpoint of improving the heat resistance, the solubility in neutral water, and the moisture absorption resistance of the resin composition.

When the diol c contains at least one selected from the group consisting of ethylene glycol, 1,2-propanediol, 1,3-propanediol, diethylene glycol, and dipropylene glycol, the percentage of the total of monomer units derived from each of ethylene glycol, 1,2-propanediol, 1,3-propanediol, diethylene glycol, and dipropylene glycol based on the total of all diol monomer units in the water-soluble polyester resin is preferably 80 mol% or more, more preferably 90 mol% or more, still more preferably 95 mol% or more, still more preferably 98 mol% or more, still more preferably substantially 100 mol%, and still more preferably 100 mol% from the viewpoint of improving the solubility in neutral water of the resin composition. Substantially 100 mol% means that a case where substances other than ethylene glycol, 1,2-propanediol, 1,3-propanediol, diethylene glycol, and dipropylene glycol are inevitably mixed is included.

When the diol c contains at least one selected from the group consisting of fluorene derivatives, the percentage of the total of monomer units derived from fluorene derivatives based on the total of all diol monomer units in the water-soluble polyester resin is preferably 10 mol% or more, more preferably 30 mol% or more, and still more preferably 40 mol% or more from the viewpoint of improving the heat resistance of the resin composition, and is preferably 90 mol% or less, more preferably 60 mol% or less, and still more preferably 50 mol% or less from the viewpoint of improving the solubility in neutral water of the resin composition.

### (Polycyclic aromatic monomer unit)

The water-soluble polyester resin has a polycyclic aromatic monomer unit. The polycyclic aromatic monomer unit is preferably the hydrophilic monomer unit a or the hydrophobic dicarboxylic acid monomer unit b, and more preferably the hydrophobic dicarboxylic acid monomer unit b from the viewpoint of improving the heat resistance of the resin composition.

The polycyclic aromatic monomer from which the polycyclic aromatic monomer unit is derived is preferably at least one selected from the group consisting of polycyclic aromatic dicarboxylic acids, more preferably at least one selected from the group consisting of naphthalenedicarboxylic acids, and still more preferably 2,6-naphthalenedicarboxylic acid from the viewpoint of improving the heat resistance of the resin composition.

The water-soluble polyester resin is preferably a water-soluble polyester resin α which has the percentage of the hydrophilic monomer unit a based on the total of all dicarboxylic acid monomer units including the hydrophilic monomer unit a of 10 to 90 mol% and the percentage of the dicarboxylic acid monomer unit b based on the total of all dicarboxylic acid monomer units including the hydrophilic monomer unit a of 10 to 90 mol%, and in which the dicarboxylic acid b for obtaining the dicarboxylic acid monomer unit b is 2,6-naphthalenedicarboxylic acid, the polycyclic aromatic dicarboxylic acid, from the viewpoint of improving the heat resistance, moisture absorption resistance, and solubility in neutral water of the resin composition.

### <Water-soluble polyester resin α>

The percentage of the hydrophilic monomer unit a based on the total of all dicarboxylic acid monomer units including the hydrophilic monomer unit a in the water-soluble polyester resin α is preferably 10 mol% or more, more preferably 15 mol% or more, and still more preferably 20 mol% or more from the viewpoint of improving the heat resistance, moisture absorption resistance, and solubility in neutral water of the resin composition, and is preferably 90 mol% or less, more preferably 80 mol% or less, and still more preferably 70 mol% or less from the same viewpoint.

The percentage of the hydrophobic dicarboxylic acid monomer unit b based on the total of all dicarboxylic acid monomer units including the hydrophilic monomer unit a in the water-soluble polyester resin α is preferably 10 mol% or more, more preferably 20 mol% or more, and still more preferably 30 mol% or more from the viewpoint of improving the heat resistance and moisture absorption resistance of the resin composition, and is preferably 90 mol% or less, more preferably 85 mol% or less, and still more preferably 80 mol% or less from the viewpoint of improving the solubility in neutral water of the resin composition.

The monomer a in the water-soluble polyester resin α is preferably one or two selected from the group consisting of 5-sulfoisophthalic acid and 2-sulfoisophthalic acid, and more preferably 5-sulfoisophthalic acid from the viewpoint of improving the heat resistance, moisture absorption resistance, and solubility in neutral water of the resin composition.

The diol c in the water-soluble polyester resin α is preferably at least one selected from the group consisting of ethylene glycol, 1,2-propanediol, diethylene glycol, 1,3-propanediol, dipropylene glycol, 1,4-cyclohexanedimethanol, hydrogenated bisphenol A, isosorbide, bisphenoxyethanolfluorene, bisphenol fluorene, biscresoxyethanolfluorene, and biscresol fluorene, and more preferably at least one selected from the group consisting of ethylene glycol, 1,3-propanediol, and bisphenoxyethanolfluorene from the viewpoint of improving the heat resistance, moisture absorption resistance, and solubility in neutral water of the resin composition.

The water-soluble polyester resin α can be exemplified by the following General Formula (1).

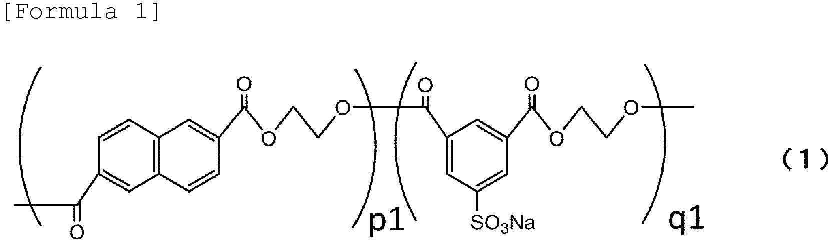

(In the Chemical Formula (1), p1 represents the number of the degree of polymerization of ethylene 2,6-naphthalenedicarboxylate, and q1 represents the number of the degree of polymerization of ethylene 5-sulfoisophthalate. The bond between ethylene 2,6-naphthalenedicarboxylate and ethylene 5-sulfoisophthalate is a block bond and/or a random bond, and a random bond is more preferable from the viewpoint of improving the solubility in neutral water of the resin composition.)

The water-soluble polyester resin can have monomer units other than the hydrophilic monomer unit a, the hydrophobic dicarboxylic acid monomer unit b, and the diol monomer unit c as long as the effects of the present embodiment are not impaired.

The method for producing the water-soluble polyester resin is not particularly limited, and a conventionally known method for producing a polyester resin can be applied.

### [Component B]

Examples of the component B include at least one selected from the group consisting of an inorganic salt and a polycyclic aromatic sulfonate having a solubility in water at 25°C of 1 g/100 g or more.

The component B has a solubility in water at 25°C of 1 g/100 g or more, preferably has a solubility in water at 25°C of 10 g/100 g or more, and more preferably has a solubility in water at 25°C of 30 g/100 g or more from the viewpoint of recycling the resin composition from an aqueous solution.

The inorganic salt is preferably at least one selected from the group consisting of an alkali metal salt and an alkaline earth metal salt, more preferably at least one selected from the group consisting of a halide, a sulfate, a nitrate, a carbonate, a hydrogencarbonate, a borate, a perchlorate, a thiocyanate, and a fluorosulfonate of an alkali metal and an alkaline earth metal, still more preferably at least one selected from the group consisting of a halide, a sulfate, a perchlorate, and a fluorosulfonate of an alkali metal and an alkaline earth metal, and still more preferably at least one selected from the group consisting of a chloride, a sulfate, a perchlorate, and a fluorosulfonate of sodium, potassium, lithium, and magnesium from the viewpoint of improving the heat resistance of the resin composition.

The polycyclic aromatic sulfonate is preferably at least one selected from the group consisting of an alkali metal salt and an alkaline earth metal salt, more preferably at least one selected from the group consisting of an alkali metal salt, still more preferably at least one selected from the group consisting of a naphthalene sulfonate of an alkali metal, and still more preferably sodium naphthalene sulfonate from the viewpoint of improving the heat resistance of the resin composition.

Examples of the component B include at least one selected from the group consisting of lithium chloride, sodium chloride, potassium chloride, magnesium chloride, calcium chloride, lithium bromide, sodium bromide, potassium bromide, potassium iodide, sodium thiocyanate, potassium thiocyanate, sodium sulfate, magnesium sulfate, sodium nitrate, potassium nitrate, lithium carbonate, sodium carbonate, potassium carbonate, sodium borate, potassium borate, lithium acetate, sodium acetate, potassium acetate, calcium acetate, lithium perchlorate, potassium perchlorate, sodium perchlorate, magnesium perchlorate, lithium fluorosulfonate, sodium fluorosulfonate, magnesium fluorosulfonate, lithium naphthalenesulfonate, sodium naphthalenesulfonate, and potassium naphthalenesulfonate. Among these, from the viewpoint of improving the heat resistance of the resin composition, at least one selected from the group consisting of lithium chloride, sodium perchlorate, magnesium perchlorate, lithium perchlorate, sodium naphthalenesulfonate, lithium naphthalenesulfonate, and magnesium sulfate are preferable.

The content of the component B in the resin composition is preferably 0.1% by mass or more, more preferably 1% by mass or more, still more preferably 5% by mass or more, and still more preferably 10% by mass or more from the viewpoint of improving the heat resistance of the resin composition. The content is preferably 30% by mass or less, more preferably 25% by mass or less, and still more preferably 20% by mass or less from the same viewpoint.

The content of the component B relative to 100 parts by mass of the component A is 1 part by mass or more, preferably 3 parts by mass or more, more preferably 5 parts by mass or more, and more preferably 10 parts by mass or more from the viewpoint of improving the heat resistance of the resin composition, and is 40 parts by mass or less, preferably 30 parts by mass or less, and more preferably 25 parts by mass or less from the same viewpoint. From both of these viewpoints, the content of the component B relative to 100 parts by mass of the component A is 1 to 40 parts by mass, preferably 3 to 30 parts by mass, more preferably 5 to 25 parts by mass, and still more preferably 10 to 25 parts by mass.

### [Resin having functional group capable of reacting or interacting with the component A (component C)]

The resin composition can contain a resin having a functional group capable of reacting or interacting with the component A (component C). The component C is not particularly limited as long as the component C is a resin having a functional group capable of reacting or interacting with the component A.

Examples of the interaction include an ion-dipole interaction, a dipole-dipole interaction, a _{Π-Π} interaction, a _{Π}-cation interaction, a dipole-induced dipole interaction, an induced dipole-induced dipole interaction, and an interionic interaction.

Examples of the reaction include an esterification reaction, an etherification reaction, a urethanization reaction, an amidation reaction, and a Diels-Alder reaction.

Through these interactions or reactions, the component C is chemically and physically bonded to the component A, and the component B can be stably and finely dispersed in the matrix of the component A. This not only improves the heat resistance, mechanical properties and the like of the resin composition, but also achieves stable dispersion in the component A even after recycling.

The functional group capable of reacting or interacting with the component A can vary depending on the type of the component A. For example, when the component A is a resin having a carboxy group, a hydroxyl group or an amino group such as the water-soluble polyester resin and the water-soluble polyamide resin, examples of the functional group capable of reacting or interacting with the carboxy group, the hydroxyl group or the amino group include at least one selected from the group consisting of an epoxy group, an acid anhydride group, an isocyanate group, an amino group, a carboxyl group, and an oxazoline group from the viewpoint of improving the heat resistance of the resin composition, at least one selected from the group consisting of an epoxy group, an acid anhydride, an isocyanate group, an amino group, and a carboxyl group are preferable, and at least one selected from the group consisting of an epoxy group, an acid anhydride, and an isocyanate group are more preferable.

Examples of the component C include Bondfast (registered trademark) 7B and Bondfast 7M (manufactured by Sumitomo Chemical Co., Ltd.); Rotador (registered trademark) AX8840 (manufactured by Arkema Inc.); JONCRYL (registered trademark) ADR4370S, JONCRYL ADR4368CS, JONCRYL ADR4368F, and JONCRYL ADR4300S (manufactured by BASF SE); and ARUFON (registered trademark) UG4035, ARUFON UG4040, and ARUFON UG4070 (manufactured by Toagosei Co., Ltd.). Examples of the reactive compatibilizer having an acid anhydride group include UMEX (registered trademark) 1010 (manufactured by SANYO CHEMICAL INDUSTRIES, LTD.); ADMER (registered trademark) (manufactured by Mitsui Chemicals, Inc.); MODIPER (registered trademark) A8200 (manufactured by NOF CORPORATION); OREVAC (registered trademark) (manufactured by Arkema Inc.); FG1901 and FG1924 (manufactured by KRATON CORPORATION); and Tuftec (registered trademark) M1911, Tuftec M1913, and Tuftec M1943 (manufactured by Asahi Kasei Chemicals Corporation). Examples of the reactive compatibilizer having an isocyanate group include CARBODILITE LA-1 (registered trademark) manufactured by Nisshinbo Chemical Inc.

The content of the component C in the resin composition is preferably 0.1% by mass or more, more preferably 1% by mass or more, and still more preferably 3% by mass or more, and is preferably 20% by mass or less, more preferably 10% by mass or less, and still more preferably 5% by mass or less from the viewpoint of reproducing the morphology before recycling.

The content of the component C relative to 100 parts by mass of the component A of the resin composition is preferably 1 part by mass or more, more preferably 2 parts by mass or more, and still more preferably 3 parts by mass or more from the viewpoint of reproducing the morphology before recycling and the viewpoint of suppressing the decrease in physical properties due to recycling, and is preferably 20 parts by mass or less, more preferably 10 parts by mass or less, and still more preferably 6 parts by mass or less from the same viewpoint.

The resin composition can contain other components as long as the effects of the present invention are not impaired. Examples of the other components include resins other than the component A and the component C, plasticizers such as benzoic acid polyalkylene glycol diester, fillers such as calcium carbonate, magnesium carbonate, glass spheres, graphite, carbon black, carbon fiber, glass fiber, talc, wollastonite, mica, alumina, silica, kaolin, whisker, and silicon carbide, and elastomers.

Examples of the elastomers include an acrylic elastomer, an olefin elastomer, a styrene elastomer, a polyester elastomer, a urethane elastomer, a polyamide elastomer, and a silicone elastomer. Among these, from the viewpoint of improving the heat resistance of the resin composition, at least one selected from the group consisting of an acrylic elastomer and a styrene elastomer are preferable, and an acrylic elastomer is more preferable. The styrene elastomer is preferably at least one selected from the group consisting of a styrene-butadiene copolymer and a styrene-butadiene-ethylene copolymer. The acrylic elastomer is preferably a methacrylic acid-alkyl acrylate copolymer. Examples of commercially available products of the elastomer include KURARITY (registered trademark) LA2250, KURARITY LA2140, and KURARITY LA4285 (manufactured by KURARAY CO., LTD.). Examples of the olefin elastomer include Kraton (registered trademark) ERS polymer (manufactured by Kraton Corporation); Kraton A polymer and Kraton G polymer (manufactured by Kraton Corporation); "Tuftec H" series and "Tuftec P" series (manufactured by Asahi Kasei Chemicals Corporation); and SEPTON (registered trademark) and HYBRAR (registered trademark) (KURARAY PLASTICS CO., Ltd.).

The content of the elastomer in the resin composition is preferably 0.1% by mass or more, more preferably 1% by mass or more, and still more preferably 5% by mass or more from the viewpoint of facilitating the use of the resin composition after recycling. The content is preferably 30% by mass or less, more preferably 20% by mass or less, and still more preferably 15% by mass or less from the viewpoint of improving the heat resistance of the resin composition.

The content of the elastomer in the resin composition relative to 100 parts by mass of the component A is preferably 0.1 parts by mass or more, more preferably 1 part by mass or more, and still more preferably 10 parts by mass or more from the viewpoint of facilitating the use of the resin composition after recycling, and is preferably 100 parts by mass or less, more preferably 60 parts by mass or less, still more preferably 40 parts by mass or less, still more preferably 20 parts by mass or less, and still more preferably 15 parts by mass or less from the viewpoint of improving the heat resistance of the resin composition.

### <Method for producing resin composition>

The method for producing a resin composition of the present embodiment is a method for producing the resin composition and includes the step of adding the component B. In this case, the amount of the component B added relative to 100 parts by mass of the component A is 1 part by mass or more, preferably 3 parts by mass or more, more preferably 5 parts by mass or more, and still more preferably 10 parts by mass or more from the viewpoint of improving the heat resistance of the resin composition, and is 40 parts by mass or less, preferably 30 parts by mass or less, and more preferably 25 parts by mass or less from the same viewpoint.

With respect to the above-mentioned embodiments, the present specification further discloses the following composition and method for production.

<1> A resin composition, including: a water-soluble resin (component A); and at least one selected from the group consisting of an inorganic salt and a polycyclic aromatic sulfonate (component B), wherein the component A has a polycyclic aromatic monomer unit, the component B has a solubility in water at 25°C of 1 g/100 g or more, and a content of the component B relative to 100 parts by mass of the component A is 1 part by mass or more and 40 parts by mass or less.
<2> The resin composition according to <1>, preferably including a resin having a functional group capable of reacting or interacting with a hydrophilic group of the water-soluble resin (component C).
<3> The resin composition according to <1> or <2>, wherein a content of the component C in the resin composition is preferably 0.1% by mass or more, more preferably 1% by mass or more, and still more preferably 3% by mass or more, and is preferably 20% by mass or less, more preferably 10% by mass or less, and still more preferably 5% by mass or less.
<4> The resin composition according to any one of <1> to <3>, wherein a content of the component C relative to 100 parts by mass of the component A of the resin composition is preferably 1 part by mass or more, more preferably 2 parts by mass or more, and still more preferably 3 parts by mass or more, and from the same viewpoint, is preferably 20 parts by mass or less, more preferably 10 parts by mass or less, and still more preferably 6 parts by mass or less.
<5> The resin composition according to any one of <1> to <4>, preferably further including an elastomer.
<6> The resin composition according to any one of <1> to <5>, wherein a content of the elastomer in the resin composition is preferably 0.1% by mass or more, more preferably 1% by mass or more, still more preferably 5% by mass or more, and is preferably 30% by mass or less, more preferably 20% by mass or less, and still more preferably 15% by mass or less.
<7> The resin composition according to any one of <1> to <6>, wherein a content of the elastomer in the resin composition relative to 100 parts by mass of the component A is preferably 0.1 parts by mass or more, more preferably 1 part by mass or more, still more preferably 10 parts by mass or more, and is preferably 100 parts by mass or less, more preferably 60 parts by mass or less, still more preferably 40 parts by mass or less, still more preferably 20 parts by mass or less, and still more preferably 15 parts by mass or less.
<8> The resin composition according to any one of <1> to <7>, wherein a content of the component A in the resin composition is preferably 70% by mass or more, more preferably 73% by mass or more, still more preferably 75% by mass or more, and is preferably 98% by mass or less, more preferably 97% by mass or less, and still more preferably 96% by mass or less.
<9> The resin composition according to any one of <1> to <8>, wherein a content of the component B in the resin composition is preferably 0.1% by mass or more, more preferably 1% by mass or more, still more preferably 5% by mass or more, and still more preferably 10% by mass or more, and is preferably 30% by mass or less, more preferably 25% by mass or less, and still more preferably 20% by mass or less.
<10> The resin composition according to any one of <1> to <9>, wherein a content of the component B relative to 100 parts by mass of the component A is 1 part by mass or more, preferably 3 parts by mass or more, more preferably 5 parts by mass or more, and more preferably 10 parts by mass or more, is 40 parts by mass or less, preferably 30 parts by mass or less, and more preferably 25 parts by mass or less, and is 1 to 40 parts by mass, preferably 3 to 30 parts by mass, more preferably 5 to 25 parts by mass, and still more preferably 10 to 25 parts by mass.
<11> The resin composition according to any one of <1> to <10>, wherein a content of the component C in the resin composition is preferably 0.1% by mass or more, more preferably 1% by mass or more, still more preferably 3% by mass or more, and is preferably 20% by mass or less, more preferably 10% by mass or less, and still more preferably 5% by mass or less.
<12> The resin composition according to any one of <1> to <11>, wherein a content of the component C relative to 100 parts by mass of the component A of the resin composition is preferably 1 part by mass or more, more preferably 2 parts by mass or more, and still more preferably 3 parts by mass or more, and is preferably 20 parts by mass or less, more preferably 10 parts by mass or less, and still more preferably 6 parts by mass or less.
<13> The resin composition according to any one of <1> to <12>, wherein a weight average molecular weight of the component A is preferably 3,000 or more, more preferably 10,000 or more, still more preferably 13,000 or more, and still more preferably 15,000 or more, and is preferably 70,000 or less, more preferably 50,000 or less, and still more preferably 30,000 or less.
<14> The resin composition according to any one of <1> to <13>, wherein the component A is preferably at least one selected from the group consisting of a water-soluble polyester resin and a water-soluble polyamide resin, and more preferably a water-soluble polyester resin.
<15> The resin composition according to <14>, wherein the water-soluble polyester resin preferably has a hydrophilic monomer unit a having a hydrophilic group.
<16> The resin composition according to <15>, wherein a content of the hydrophilic group in the water-soluble polyester resin is preferably 0.5 mmol/g or more, more preferably 0.7 mmol/g or more, and still more preferably 0.9 mmol/g or more, is preferably 3 mmol/g or less, more preferably 2.5 mmol/g or less, and still more preferably 2 mmol/g or less, and is preferably 0.5 to 3 mmol/g, more preferably 0.7 to 2.5 mmol/g, and still more preferably 0.9 to 2 mmol/g.
<17> The resin composition according to <15> or <16>, wherein the hydrophilic group is preferably at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group, more preferably at least one selected from the group consisting of a carboxylate group, a phosphate group, and a sulfonate group, and still more preferably a sulfonate group.
<18> The resin composition according to any one of <15> to <17>, wherein a monomer a from which the hydrophilic monomer unit a is derived is preferably at least one selected from the group consisting of a carboxylic acid, an amine, and an amino acid, more preferably a carboxylic acid, preferably an aromatic carboxylic acid, more preferably at least one selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, preferably at least one selected from the group consisting of 5-hydroxyisophthalic acid, 5-aminoisophthalic acid, 5-sulfoisophthalic acid, 2-sulfoterephthalic acid, and 4-sulfo-2,6-naphthalenedicarboxylic acid, more preferably one or two selected from the group consisting of 5-sulfoisophthalic acid and 2-sulfoterephthalic acid, and still more preferably 5-sulfoisophthalic acid.
<19> The resin composition according to any one of <14> to <18>, wherein the water-soluble polyester resin preferably has a hydrophobic dicarboxylic acid monomer unit b and a diol monomer unit c.
<20> The resin composition according to <19>, wherein a dicarboxylic acid b from which the hydrophobic dicarboxylic acid monomer unit b is derived is preferably at least one selected from the group consisting of an aromatic dicarboxylic acid, an aliphatic dicarboxylic acid, and an alicyclic dicarboxylic acid, more preferably at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantane dicarboxylic acid, still more preferably at least one selected from the group consisting of terephthalic acid, 2,5-furandicarboxylic acid, and 2,6-naphthalenedicarboxylic acid, and still more preferably 2,6-naphthalenedicarboxylic acid.
<21> The resin composition according to <19> or <20>, wherein a percentage of the amount of substance of the hydrophobic dicarboxylic acid monomer unit b in the water-soluble polyester resin based on the total amount of substance of all monomer units in the water-soluble polyester resin is preferably 1 mol% or more, more preferably 10 mol% or more, and still more preferably 15 mol% or more, is preferably 45 mol% or less, more preferably 42 mol% or less, still more preferably 40 mol% or less, and is preferably 1 to 45 mol%, more preferably 10 to 42 mol%, and still more preferably 15 to 40 mol%.
<22> The resin composition according to any one of <19> to <21>, wherein a molar ratio of the hydrophilic monomer unit a to the hydrophobic dicarboxylic acid monomer unit b of the water-soluble polyester resin (the hydrophilic monomer unit a/the hydrophobic dicarboxylic acid monomer unit b) is preferably 10/90 or more, more preferably 15/85 or more, still more preferably 18/82 or more, and still more preferably 20/80 or more, and is preferably 70/30 or less, more preferably 65/35 or less, and still more preferably 60/40 or less.
<23> The resin composition according to any one of <19> to <22>, wherein a diol c from which the diol monomer unit c is derived is preferably an aliphatic diol or an aromatic diol, and more preferably an aliphatic diol.
<24> The resin composition according to <23>, wherein the diol c is preferably at least one selected from the group consisting of ethylene glycol, 1,2-propanediol, diethylene glycol, 1,3-propanediol, dipropylene glycol, 1,4-cyclohexanedimethanol, hydrogenated bisphenol A, isosorbide, bisphenoxyethanolfluorene, bisphenol fluorene, biscresoxyethanolfluorene, and biscresol fluorene, and more preferably at least one selected from the group consisting of ethylene glycol, 1,3-propanediol, and bisphenoxyethanolfluorene.
<25> A method for producing the resin composition according to any one of <1> to <24>, including the step of:
   adding the component B.

### EXAMPLES

The pressure is expressed in an absolute pressure. "Normal pressure" refers to 101.3 kPa.

### [Analysis method]

### [Weight average molecular weight of water-soluble resin]

A calibration curve was prepared from standard polystyrene using a gel permeation chromatograph (GPC) method under the following conditions to determine the weight average molecular weight (Mw).

### (Measurement condition)

- Apparatus: HLC-8320 GPC (Detector integrated type, manufactured by TOSOH CORPORATION)
- Column: α-M × 2 columns (7.8 mmI.D. × 30 cm, manufactured by TOSOH CORPORATION)

- Eluent: 60 mmol/L phosphoric acid + 50 mmol/L lithium brominate/dimethylformamide solution
- Flow rate: 1.0 ml/min
- Column temperature: 40°C
- Detector: RI detector
- Standard substance: polystyrene

### [Glass transition temperature]

Measurement was performed by DSC (DSC 8020 manufactured by Seiko Instruments Inc.). The rate of temperature increase was 10°C/min, and the second run data was used.

### [Synthesis of water-soluble polyester resin A1]

Into a 2 L stainless steel separable flask (with a K tube, a stirrer, a nitrogen inlet tube), 244 g of dimethyl 2,6-naphthalenedicarboxylate (manufactured by Tokyo Chemical Industry Co., Ltd.), 216 g of ethylene glycol (manufactured by FUJIFILM Wako Pure Chemical Corporation), 101 g of dimethyl sodium 5-sulfoisophthalate (manufactured by SANYO CHEMICAL INDUSTRIES, LTD.), 57 mg of titanium tetrabutoxide (manufactured by Tokyo Chemical Industry Co., Ltd.), and 211 mg of anhydrous sodium acetate (manufactured by FUJIFILM Wako Pure Chemical Corporation) were charged, and the surface temperature of a mantle heater was raised to an external temperature of 235°C with the mantle heater under normal pressure and a nitrogen atmosphere with stirring to perform a transesterification reaction at 235°C for 6.2 hours. Subsequently, the surface temperature of the mantle heater was raised to an external temperature of 270°C, and polycondensation was performed for 2 hours with stirring while maintaining the temperature at 270°C, and at the same time reducing the pressure to 4.9 kPa. Nitrogen was charged into the stainless steel separable flask, and the pressure was returned to normal pressure to obtain a slightly yellow transparent (room temperature) water-soluble polyester resin A1. The weight average molecular weight (in terms of polystyrene) measured by GPC was 17,800. The content of the sulfonate group in the water-soluble polyester resin A1 calculated from the charged amount of the raw materials was 1.0 mmol/g. The amount of substance of the monomer unit having a sulfonate group based on all the monomer units in the water-soluble polyester resin A1 calculated from the charged amount of the raw materials was 12.5 mol%. A water-soluble polyester resin A1 to which no salt was added was used as the resin composition of Comparative Example 1.

### [Synthesis of water-soluble polyester resin A2]

Into a 2 L stainless steel separable flask (with a K tube, a stirrer, a nitrogen inlet tube), 47.4 parts by mass of dimethyl 2,6-naphthalenedicarboxylate (manufactured by Tokyo Chemical Industry Co., Ltd.), 104.2 parts by mass of dimethyl sodium 5-sulfoisophthalate (manufactured by SANYO CHEMICAL INDUSTRIES, LTD.), 44.7 parts by mass of ethylene glycol (manufactured by FUJIFILM Wako Pure Chemical Corporation), 0.052 parts by mass of titanium tetrabutoxide (manufactured by Tokyo Chemical Industry Co., Ltd.), 234.6 parts by mass of bisphenoxyethanolfluorene (manufactured by Osaka Gas Chemicals Co., Ltd.), and 1.73 parts by mass of anhydrous sodium acetate (manufactured by FUJIFILM Wako Pure Chemical Corporation) were charged, the temperature of the surface of a mantle heater was raised from 160°C to 260°C over 1 hour with the mantle heater with stirring under normal pressure and a nitrogen atmosphere, and then the mixture was stirred for 6 hours and 30 minutes while maintaining the temperature at 260°C to perform a transesterification reaction. Then, 17.6 parts by mass of tetrabutylphosphonium dodecylbenzenesulfonate (manufactured by TAKEMOTO OIL & FAT Co., Ltd.: ELECUT S-418) was added, the temperature of the surface of the heater was raised from 260°C to 290°C over 30 minutes, and then the mixture was stirred for 1 hour and 20 minutes while maintaining the temperature at 290°C. Then, the pressure was reduced from normal pressure to 2 kPa, the temperature of the surface of the heater was raised from 290°C to 325°C over 35 minutes, and then the reaction was performed while maintaining the temperature at 325°C. After the temperature was raised to 325°C, the mixture was stirred for 2 hours, and then the mixture was stirred for 3 hours while gradually reducing the pressure from 2 kPa to 28 Pa to perform a reaction. Nitrogen was charged into the stainless steel separable flask, and the pressure was returned to normal pressure to obtain a water-soluble polyester resin A2. The weight average molecular weight (in terms of polystyrene) measured by GPC was 29,400. The content of the sulfonate group in the water-soluble polyester resin A2 calculated from the charged amount of the raw materials was 0.99 mmol/g. The amount of substance of the monomer unit having a sulfonate group based on all the monomer units in the water-soluble polyester resin A2 calculated from the charged amount of the raw materials was 32.2 mol%. A water-soluble polyester resin A2 to which no salt was added was used as the resin composition of Comparative Example 3.

### [Synthesis of water-soluble polyester resin A3]

Into a 2 L stainless steel separable flask (with a K tube, a stirrer, a nitrogen inlet tube), 122.1 parts by mass of dimethyl 2,6-naphthalenedicarboxylate (manufactured by Tokyo Chemical Industry Co., Ltd.), 148.1 parts by mass of dimethyl sodium 5-sulfoisophthalate (manufactured by SANYO CHEMICAL INDUSTRIES, LTD.), 142.8 parts by mass of ethylene glycol (manufactured by FUJIFILM Wako Pure Chemical Corporation), 0.163 parts by mass of titanium tetrabutoxide (manufactured by Tokyo Chemical Industry Co., Ltd.), and 0.405 parts by mass of anhydrous sodium acetate (manufactured by FUJIFILM Wako Pure Chemical Corporation) were charged, the temperature of the surface of a mantle heater was raised from 160°C to 260°C over 1 hour with the mantle heater with stirring under normal pressure and a nitrogen atmosphere, and then the mixture was stirred for 6 hours and 30 minutes while maintaining the temperature at 260°C to perform a transesterification reaction. Then, the temperature of the surface of the heater was raised from 260°C to 290°C over 30 minutes. Then, the temperature was maintained at 290°C, the pressure was reduced from normal pressure to 5 kPa, and the mixture was stirred for 3 hours to perform a reaction. Nitrogen was charged into the stainless steel separable flask, and the pressure was returned to normal pressure to obtain a water-soluble polyester resin A3. The weight average molecular weight (in terms of polystyrene) measured by GPC was 3,900. The content of the sulfonate group in the water-soluble polyester resin A3 calculated from the charged amount of the raw materials was 1.86 mmol/g. The amount of substance of the monomer unit having a sulfonate group based on all the monomer units in the water-soluble polyester resin A3 calculated from the charged amount of the raw materials was 25 mol%. A water-soluble polyester resin A3 to which no salt was added was used as the resin composition of Comparative Example 4.

### [Synthesis of water-soluble polyester resin A4]

Into a 2 L stainless steel separable flask (with a K tube, a stirrer, a nitrogen inlet tube), 210.0 parts by mass of dimethyl terephthalate (manufactured by Tokyo Chemical Industry Co., Ltd.), 90.0 parts by mass of dimethyl isophthalate (manufactured by Tokyo Chemical Industry Co., Ltd.), 45.8 parts by mass of dimethyl sodium 5-sulfoisophthalate (manufactured by SANYO CHEMICAL INDUSTRIES, LTD.), 235.1 parts by mass of 1,3-propanediol (manufactured by Tokyo Chemical Industry Co., Ltd.), and 0.841 parts by mass of titanium tetrabutoxide (manufactured by Tokyo Chemical Industry Co., Ltd.) were charged, the temperature of the surface of a mantle heater was raised from 160°C to 220°C over 1 hour with the mantle heater with stirring under normal pressure and a nitrogen atmosphere, and then the mixture was stirred for 6 hours and 30 minutes while maintaining the temperature at 220°C to perform a transesterification reaction. Then, the temperature of the surface of the heater was raised from 220°C to 240°C over 10 minutes. Then, the temperature was maintained at 240°C, the pressure was reduced from normal pressure to 917 Pa, and the mixture was stirred for 8 hours to perform a reaction. Nitrogen was charged into the stainless steel separable flask, and the pressure was returned to normal pressure to obtain a water-soluble polyester resin A4. The weight average molecular weight (in terms of polystyrene) measured by GPC was 12,000. The content of the sulfonate group in the water-soluble polyester resin A4 calculated from the charged amount of the raw materials was 0.40 mmol/g. The amount of substance of the monomer unit having a sulfonate group based on all the monomer units in the water-soluble polyester resin A4 calculated from the charged amount of the raw materials was 4.5 mol%. A water-soluble polyester resin A4 to which no salt was added was used as the resin composition of Comparative Example 6.

### [Preparation Example 1 of salt]

Into a beaker, 2.5 parts by mass of 2-naphthalenesulfonic acid hydrate (manufactured by Tokyo Chemical Industry Co., Ltd.) and 47.5 parts by mass of deionized water were placed and stirred to obtain an aqueous 2-naphthalenesulfonic acid solution. To this aqueous solution, 0.29 parts by mass of lithium hydroxide (manufactured by FUJIFILM Wako Pure Chemical Corporation) was gradually placed for neutralization. Lithium hydroxide was dissolved so that the aqueous solution would have a pH around 7 while checking the pH of the aqueous solution with a pH meter, and the addition of lithium hydroxide was terminated at the time when the pH reached 7. This aqueous solution was dried under reduced pressure at 60°C to remove moisture, thereby lithium 2-naphthalenesulfonate as a white powder was obtained.

### [Production of resin composition according to Examples 1 to 18]

To 95 parts by mass of deionized water, 5 parts by mass of the water-soluble polyester resin shown in Table 1 was placed so as to be 5% by mass, and the mixture was stirred at 70°C for 30 minutes to prepare an aqueous water-soluble polyester resin solution. The salt shown in Table 1 was added to the water-soluble polyester resin in an amount shown in Table 1, and the mixture was mixed for about 10 minutes. The obtained salt-containing water-soluble polyester resin composite dispersion was poured into a poly cup, and dried at 60°C under reduced pressure for 12 hours or more to obtain a resin composition according to Examples 1 to 18.

### [Production of resin composition according to Examples 19 to 24 and Comparative Example 5]

To 95 parts by mass of N,N-dimethylformamide (DMF), 5 parts by mass of the water-soluble polyester resin shown in Table 1 was placed so as to be 5% by mass, and the mixture was stirred at room temperature for dissolution. After the solution became transparent and the dissolution of the water-soluble polyester resin was confirmed, the salt shown in Table 1 was added in an amount of 10.0 parts by mass relative to 100 parts by mass of the water-soluble polyester resin, and stirring was continued at room temperature until the salt was dissolved. The obtained DMF solution of a salt-containing water-soluble polyester resin was poured into a poly cup, and dried at 150°C under reduced pressure for 12 hours or more to obtain a resin composition according to Examples 19 to 24 and Comparative Example 5. The amount of residual DMF was determined by 1H NMR, and was confirmed to be less than 5% by mass in all samples.

### [Production of resin composition according to Example 25]

Using Labo Plastmill (Labo Plastmill 4C150 manufactured by Toyo Seiki Seisaku-sho, Ltd.), the water-soluble polyester resin A1 and 10.0 parts by mass of the salt shown in Table 1 relative to 100 parts by mass of the water-soluble polyester resin A1 were melt-kneaded under the condition of 230°C/90 rpm/10 min to obtain a resin composition according to Example 25.

### [Production of resin composition according to Example 26]

To Labo Plastomill (Labo Plastmill 4C150 manufactured by Toyo Seiki Seisaku-sho, Ltd.), 42.6 g of the water-soluble polyester resin A1, 5.3 g of KURARITY LA 2250 (elastomer manufactured by KURARAY CO., LTD.), and 2.1 g of Bondfast 7B (manufactured by Sumitomo Chemical Co., Ltd.) were placed, and melt-kneaded under the condition of 230°C/90 rpm/10 minutes to obtain a water-soluble polyester resin A1 composite. To 95 parts by mass of deionized water, 5 parts by mass of the water-soluble polyester compound A1 composite was placed so as to be 5% by mass, and the mixture was stirred at 70°C for 30 minutes to prepare a water-soluble polyester compound A1 composite aqueous dispersion. The salt shown in Table 1 was added thereto in an amount of 8.50 parts by mass relative to 100 parts by mass of the water-soluble polyester resin A1, and the mixture was mixed for about 10 minutes. The obtained salt-containing water-soluble polyester resin A1 composite aqueous dispersion was poured into a poly cup, and dried at 60°C under reduced pressure for 12 hours or more to obtain a resin composition according to Example 26.

### [Production of water-soluble polyester resin A1 composite according to Comparative Example 2]

To Labo Plastomill (Labo Plastmill 4C150 manufactured by Toyo Seiki Seisaku-sho, Ltd.), 42.6 g of the water-soluble polyester resin A1 obtained above, 5.3 g of KURARITY LA 2250 (elastomer manufactured by KURARAY CO., LTD.), and 2.1 g of Bondfast 7B (manufactured by Sumitomo Chemical Co., Ltd.) were placed, and melt-kneaded under the condition of 230°C/90 rpm/10 minutes to obtain a water-soluble polyester resin A1 composite according to Comparative Example 2.

The glass transition temperatures of Examples 1 to 26 and Comparative Examples 1 to 6 are shown in Table 1. In Comparative Examples 1 to 4 and 6, water-soluble polyester resins A1 to A4 were used as evaluation samples.

Salts other than the component A used in Table 1 are shown below.
- Sodium chloride (manufactured by FUJIFILM Wako Pure Chemical Corporation)
- Calcium chloride (manufactured by FUJIFILM Wako Pure Chemical Corporation)
- Lithium chloride (manufactured by FUJIFILM Wako Pure Chemical Corporation)
- Sodium perchlorate (manufactured by FUJIFILM Wako Pure Chemical Corporation)
- Lithium perchlorate (manufactured by FUJIFILM Wako Pure Chemical Corporation)
- Magnesium perchlorate (manufactured by FUJIFILM Wako Pure Chemical Corporation)
- Sodium 2-naphthalenesulfonate (manufactured by FUJIFILM Wako Pure Chemical Corporation)
- Lithium 2-naphthalenesulfonate (Preparation Example 1 of salt)
- Magnesium sulfate (manufactured by FUJIFILM Wako Pure Chemical Corporation)

**[Table 1]**

| | Water-soluble polyester resin (component A) | Salt (component B) | Content₁) | Glass transition temperature (°C) |
|---|---|---|---|---|
| Example 1 | Water-soluble polyester resin A1 | Lithium chloride | 10.0 | 116 |
| Example 2 | Water-soluble polyester resin A1 | Sodium perchlorate | 10.0 | 140 |
| Example 3 | Water-soluble polyester resin A1 | Lithium perchlorate | 10.0 | 144 |
| Example 4 | Water-soluble polyester resin A1 | Magnesium perchlorate | 10.0 | 128 |
| Example 5 | Water-soluble polyester resin A1 | Sodium naphthalenesulfonate | 10.0 | 113 |
| Example 6 | Water-soluble polyester resin A1 | Lithium naphthalenesulfonate | 10.0 | 113 |
| Example 7 | Water-soluble polyester resin A1 | Lithium perchlorate | 5.00 | 124 |
| Example 8 | Water-soluble polyester resin A1 | Lithium naphthalenesulfonate | 5.00 | 115 |
| Example 9 | Water-soluble polyester resin A1 | Magnesium perchlorate | 5.00 | 125 |
| Example 10 | Water-soluble polyester resin A1 | Magnesium sulfate | 5.00 | 113 |
| Example 11 | Water-soluble polyester resin A1 | Magnesium sulfate | 10.0 | 114 |
| Example 12 | Water-soluble polyester resin A1 | Lithium perchlorate | 20.0 | 146 |
| Example 13 | Water-soluble polyester resin A1 | Lithium perchlorate | 30.0 | 122 |
| Example 14 | Water-soluble polyester resin A1 | Lithium naphthalenesulfonate | 30.0 | 119 |
| Example 15 | Water-soluble polyester resin A1 | Magnesium perchlorate | 30.0 | 138 |
| Example 16 | Water-soluble polyester resin A1 | Magnesium sulfate | 30.0 | 116 |
| Example 17 | Water-soluble polyester resin A1 | Calcium chloride | 10.0 | 118 |
| Example 18 | Water-soluble polyester resin A1 | Sodium chloride | 22.0 | 110 |
| Example 19 | Water-soluble polyester resin A1 | Sodium perchlorate | 10.0 | 135 |
| Example 20 | Water-soluble polyester resin A1 | Lithium perchlorate | 10.0 | 141 |
| Example 21 | Water-soluble polyester resin A1 | Magnesium perchlorate | 10.0 | 127 |
| Example 22 | Water-soluble polyester resin A1 | Lithium naphthalenesulfonate | 10.0 | 113 |
| Example 23 | Water-soluble polyester resin A2 | Lithium perchlorate | 25.0 | 190 |
| Example 24 | Water-soluble polyester resin A3 | Lithium perchlorate | 10.0 | 140 |
| Example 25 | Water-soluble polyester resin A1 | Lithium naphthalenesulfonate | 10.0 | 112 |
| Example 26 | Water-soluble polyester resin A1 | Lithium chloride | 8.50 | 112 |
| Comparative Example 1 | Water-soluble polyester resin A1 | None | 0 | 108 |
| Comparative Example 2 | Water-soluble polyester resin A1 | None | 0 | 107 |
| Comparative Example 3 | Water-soluble polyester resin A2 | None | 0 | 182 |
| Comparative Example 4 | Water-soluble polyester resin A3 | None | 0 | 115 |
| Comparative Example 5 | Water-soluble polyester resin A4 | Lithium perchlorate | 10 | 84 |
| Comparative Example 6 | Water-soluble polyester resin A4 | None | 0 | 45 |

| | | | | |
|---|---|---|---|---|
| 1) Amount relative to 100 parts by mass of component A (unit: parts by mass) | | | | |

## Claims

1. A resin composition, comprising:
a water-soluble resin (component A); and
at least one selected from the group consisting of an inorganic salt and a polycyclic aromatic sulfonate (component B),
wherein the component A has a polycyclic aromatic monomer unit, the component B has a solubility in water at 25°C of 1 g/100 g or more, and a content of the component B relative to 100 parts by mass of the component A is 1 part by mass or more and 40 parts by mass or less.

2. The resin composition according to claim 1, comprising a resin having a functional group capable of reacting or interacting with a hydrophilic group of the water-soluble resin (component C).

3. The resin composition according to claim 2,
wherein a content of the component C relative to 100 parts by mass of the component A is 1 part by mass or more and 20 parts by mass or less.

4. The resin composition according to any one of claims 1 to 3, further comprising an elastomer.

5. The resin composition according to claim 4,
wherein a content of the elastomer relative to 100 parts by mass of the component A is 0.1 parts by mass or more and 100 parts by mass or less.

6. The resin composition according to any one of claims 1 to 5, wherein a content of the component A is 70% by mass or more and 98% by mass or less.

7. The resin composition according to any one of claims 1 to 6, wherein a content of the component B is 0.1% by mass or more and 30% by mass or less.

8. The resin composition according to any one of claims 1 to 7, wherein a content of the component C is 0.1% by mass or more and 20% by mass or less.

9. The resin composition according to any one of claims 1 to 8, wherein a weight average molecular weight of the component A is 3,000 or more and 70,000 or less.

10. The resin composition according to any one of claims 1 to 9, wherein the component A is a water-soluble polyester resin.

11. The resin composition according to claim 10,
wherein the water-soluble polyester resin has a hydrophilic monomer unit a having a hydrophilic group.

12. The resin composition according to claim 11,
wherein a content of the hydrophilic group in the water-soluble polyester resin is 0.5 mmol/g or more and 3.0 mmol/g or less.

13. The resin composition according to claim 11 or 12, wherein the hydrophilic group is a sulfonate group.

14. The resin composition according to any one of claims 11 to 13, wherein a monomer from which the hydrophilic monomer unit a is derived is an aromatic dicarboxylic acid.

15. The resin composition according to claim 14,
wherein the aromatic dicarboxylic acid is 5-sulfoisophthalic acid.

16. The resin composition according to any one of claims 10 to 15, wherein the water-soluble polyester resin has a hydrophobic dicarboxylic acid monomer unit b and a diol monomer unit c.

17. The resin composition according to claim 16,
wherein a monomer from which the hydrophobic dicarboxylic acid monomer unit b is derived is 2,6-naphthalenedicarboxylic acid.

18. The resin composition according to claim 16 or 17, wherein a diol from which the diol monomer unit c is derived is an aliphatic diol.

19. The resin composition according to claim 18,
wherein the aliphatic diol is at least one selected from the group consisting of ethylene glycol, 1,2-propanediol, and bisphenoxyethanolfluorene.

20. A method for producing the resin composition according to any one of claims 1 to 19, comprising the step of:
adding the component B.
